# EUROPEAN PATENT SPECIFICATION

(11) **EP 2 320 628 B1**
(45) Date of publication and mention of the grant of the patent: **18.07.2012**
(21) Application number: 09175377.2
(22) Date of filing: 09.11.2009
(51) Int. Cl.: H04M 1/60, H04R 1/10, H04M 1/725

(54) **Multi-button remote control headset with improved signalling**
Fernsteuerungs-Headset mit mehreren Knöpfen und verbesserter Signalgebung
Écouteurs à télécommande multi-boutons dotés d'une signalisation améliorée

(43) Date of publication of application: 11.05.2011
(73) Proprietor: Research In Motion Limited, Waterloo, ON N2L 3W8 (CA)
(72) Inventor: Gustavsson, Bengt Stefan, Waterloo Ontario N2L 3W8 (CA)
(74) Representative: Patel, Binesh

(56) References cited:
- EP-A1- 1 976 246
- US-A1- 2006 068 857
- US-A1- 2008 167 087

## Description

### BACKGROUND

The present patent disclosure relates to multi-button headset, and more specifically, to multi-button headset used in conjunction with a multi-purpose mobile communication device.

Advances in the design and computing capabilities of mobile communication device provide, in addition to wireless communication between individuals, many diversified functions, such as storing and reproducing MPEG-1 Audio Layer 3 (MP3) audio files, receiving digital broadcasts, and displaying MPEG-4 video files.

These additional functions allow and require a mobile communication device to produce sounds for entertaining the user. Generally, a headset enables the user to listen to sounds from the mobile communication device without causing annoyance to others.

The headset preferably includes a remote control so that the user is able to control the audio/video player within the mobile communication device. The headset, preferably a stereo headset built to deliver good listening experience, is usually connected to the mobile communication device through a connector interface.

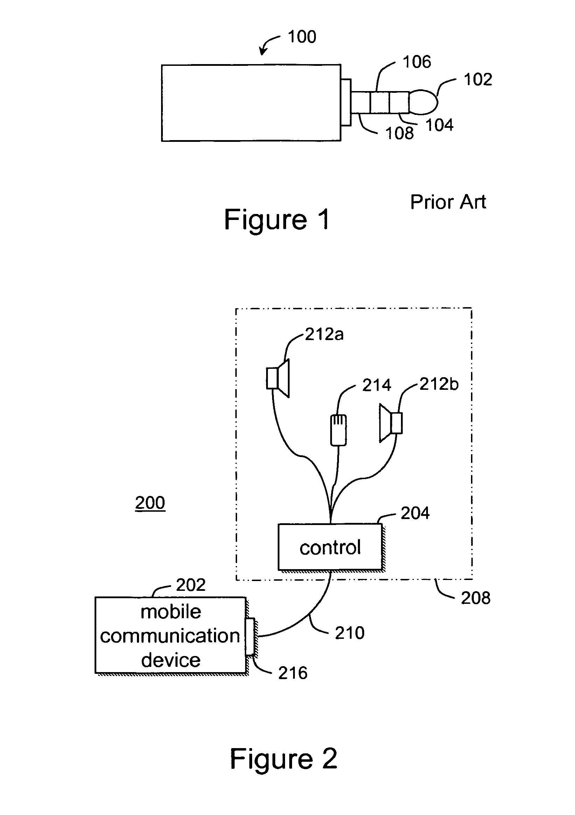

These connector interfaces are *de facto* generalized for mobile communication devices. One example of the connector interfaces is a 4-pole connector 100 as illustrated in Figure 1. Generally, for a stereo headset, one pin for example, 106, is assigned to the ground, and two pins, for example, 102, 104, are assigned to carry the left and right channels of sounds.

Conveniently, headsets used with mobile communication devices also include a microphone for voice communication. In this case, the control of the audio/video player within the mobile communication device and the microphone will share the same line, for example, the line connected to pin 108.

The control of the audio/video player within the mobile communication device may include commands such as play, stop, pause, fast forward etc. These control functions may be realized using a single button through a single press, or a long press, to activate different functions. However, the number of control functions which can be implemented in a single button is limited.

Alternatively, multi-button controls are implemented for use with mobile communication devices. The implementation of multi-button remote controls using a standard headset and a standard jack provides the benefit that mobile communication devices do not have to be altered in order to operate with the headset.

However, when any of the control functions is activated, the control signal may interfere with the audio signal designated to or originating from the headset. In the example illustrated in Figure 2, the user at the far end may experience an interruption of the voice, or noise during the call.

If one desires to maintain the compatibility between different headsets and mobile communication devices, a standard pin layout is needed. No new conductor can therefore be added for carrying the control signal.
European Patent 1 976 246 describes a headset for a mobile communication device having a multi-button control. The multi-button control is implemented with a standard headset jack. The multi-button control is decoded by a microprocessor after which an encoded signal is then transmitted from the processor to the handset.
US published patent application US 2006/068857 describes a hybrid (wired/wireless) headset. The hybrid wired/wireless headset is configurable to connect to a phone (or other connected device) using a wired mode or a wireless mode.
US published patent application US 2008/167087 describes a wireless communication headset having both wired and wireless modes. The wireless headset includes a headset connector assembly that can be coupled to a cable connector of a cable, which can in turn be connected to a telephone. When the wireless headset is coupled to the telephone, it can advantageously be operable to exchange audio information with the telephone through the cable, receive electrical power from the telephone through the cable, or both.

Therefore, there is a need to separate the control line from the audio lines of the headset.

### BRIEF SUMMARY OF THE PRESENT PATENT DISCLOSURE

In accordance with one aspect of the present patent disclosure there is provide a headset comprising: a speaker; a multi-pole connector for connecting to a mobile communication device outputting an audio; a multi-conductor line connecting the multi-pole connector to the speaker, the multi-conductor line carrying the audio from the mobile communication device to the speaker; and a multi-button remote control having a circuitry establishing a wireless control channel, the wireless control channel used for sending a command from the multi-button remote control, the command controlling the outputting of the audio.

In accordance with another aspect of the present patent disclosure there is provided a multi-purpose mobile communication device comprising: a socket for receiving a multi-pole connector of a headset, the headset including a speaker; the multi-pole connector connected to a multi-conductor line extending to the speaker, the headset further comprising a multi-button remote control; a first circuitry decoding audio files and transmitting an audio to the socket and through the multi-conductor line extending to the speaker; and a second circuitry establishing a wireless control channel with a multi-button remote control, the wireless control channel used for receiving a command from the multi-button remote control, the command controlling the outputting the audio.

In accordance with another aspect of the present patent disclosure there is provided a method for controlling playback of audio files on a mobile communication device, the method comprising: connecting a headset to a mobile communication device through a multi-conductor line; transmitting an audio to the headset through the multi-conductor line; establishing a wireless connection between a multi-button remote control and the mobile communication device; establishing a wireless control channel over the wireless connection; and transmitting a command from the multi-button remote control to the mobile communication device over the wireless control channel.

Preferably, the wireless control channel is implemented using Bluetooth technology.

Preferably, the wireless control channel uses AudioNideo Remote Control Profile.

Preferably, the multi-button remote control is attached to the headset.

Preferably, the handset comprises a single chip implementing the wireless control channel.

Preferably, the headset is a stereo headset and further comprises an additional speaker.

Preferably, the multi-conductor line has adequate number of conductors for transmitting the audio.

Preferably, the command is at least one of: multiple presses, pulse trains, unique frequencies, dual tone multiple frequency, and pulse width.

Preferably, the wireless control channel is bidirectional.

Preferably, the multi-pole connector has four poles.

Preferably, the multi-button remote control is powered by a rechargeable battery.

Preferably, the multi-button remote control is powered by a bias current.

Preferably, the multi-button remote control communicated with other wireless devices.

### BRIEF DESCRIPTION OF THE DRAWINGS

These and other features of the patent disclosure will become more apparent from the following description in which reference is made to the appended drawings wherein:
Figure 1 shows an exemplary 4-pole connector;
Figure 2 describes an environment where a mobile communication device is connected to a control;
Figure 3 shows a headset with a multi-button control;
Figure 4 illustrates exemplary methods of encoding the control signals;
Figure 5 illustrates an exemplary circuitry modulating the pulses in the multi-button remote control;
Figure 6 shows a wireless control channel between a mobile communication device and a multi-button control for controlling the mobile communication device in accordance with one embodiment; Figure 7 shows a high-level view of the architecture of the Bluetooth protocol stack in the Audio/Video Remote Control Profile;
Figure 8 describes a method of establishing a wireless control channel between a multi-button remote control of a headset and a mobile communication device; and
Figure 9 shows the control of the mobile communication device through a wireless control channel in accordance with another embodiment.

### DETAILED DESCRIPTION OF PREFERRED EMBODIMENTS

Reference will now be made in detail to some specific embodiments of the patent disclosure. Examples of these specific embodiments are illustrated in the accompanying drawings. While the patent disclosure is described in conjunction with these specific embodiments, it will be understood that it is not intended to limit the patent disclosure to the described embodiments. On the contrary, it is intended to cover alternatives, and modifications as may be included within the scope of the patent disclosure as defined by the appended claims. In the following description, numerous specific details are set forth in order to provide a thorough understanding of the present patent disclosure. The present patent disclosure may be practiced without some or all of these specific details. In other instances, well-known process operations have not been described in detail in order not to unnecessarily obscure the present patent disclosure.

The terminology used herein is for the purpose of describing particular embodiments only and is not intended to be limiting of the patent disclosure. As used herein, the singular forms "a", "an" and "the" are intended to include the plural forms as well, unless the context clearly indicates otherwise. It will be further understood that the terms "comprises" or "comprising", or both when used in this specification, specify the presence of stated features, integers, steps, operations, elements, and/or components, but do not preclude the presence or addition of one or more other features, integers, steps, operations, elements, components, and/or groups thereof.

It is further understood that the use of relational terms such as first and second, and the like, if any, are used solely to distinguish one from another entity, item, or action without necessarily requiring or implying any actual such relationship or order between such entities, items or actions.

The flowchart and block diagrams in the Figures illustrate the architecture, functionality, and operation of possible implementations of systems, methods and computer program products according to various embodiments of the present patent disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Referring to Figure 2, the embodiments of the present patent disclosure may be practiced in an environment 200 where a mobile communication device 202 is connected to a control, for example, a multi-button remote control 204, through a multi-conductor line 210. A pair of speakers 212a, 212b, and a microphone 214 is connected to the multi-button remote control 204. The multi-line connection 210 is connected to a multi-pole connector 216. Conventionally, the individual lines in the multi-conductor line 210 are less than or equal to the conductors required for carrying the audio signals to the headset so that the control signal from the multi-button remote control 204 to the mobile communication device 202 would be carried on one or more of the individual lines in the multi-line connection 210. However, those skilled in the art will appreciate in view of the present discussion, that other alternative interconnection arrangements may be used without deviating from the present patent disclosure.

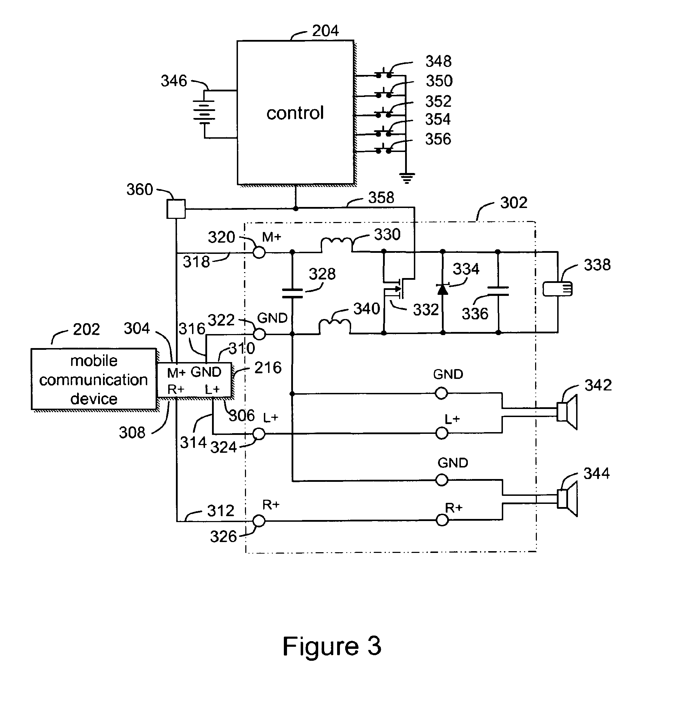

Referring to Figure 3, circuitry 302 for a standard headset 208 is shown. The headset 208 includes a multi-pole connector 216 for connecting the headset to the mobile communication device 202. The multi-pole connector 216 comprises a microphone portion 304, a left speaker portion 306, a right speaker portion 308 and a ground portion 310. The multi-pole connector 216 is connected to the circuitry 302 via a line with a plurality of conductors 312, 314, 316, 318.

In one embodiment, the circuitry 302 comprises a set of connectors 320, 322, 324, 326 for receiving the multi-conductor line 312, 314, 316, 318 from their respective locations within the multi-pole connector 216. The microphone connector 320 is connected to a first capacitor 328 and an inductor 330. The first capacitor 328 and the inductor 330 provide a wide band filter, reducing and/or preventing the headset 208 from picking up and transmitting signals via the microphone line. An output of the inductor 330 is connected to plurality of elements connected in parallel. The plurality of elements may include a Field-Effect Transistor (FET) 332, a Zener diode 334, a second capacitor 336, and a microphone 338. The Zener diode 334 is used to control the electrostatic discharge (ESD) which may be experienced within the headset 208. A second inductor 340 is located between the ground connector 322 and the output of the parallel elements. The output from the second inductor 340 is connected to ground along with one side of a pair of speakers 342, 344. The left speaker portion connector 324 and the right speaker portion connector 326 are also connected to their respective, left and right speakers 342, 344. As will be understood, the speakers may be located within the ear buds of the headset 208 which are then inserted into a user's ears so that they may listen of the output from the mobile communication device 202.

The multi-button control 204 may be powered by a battery 346. The battery 346 is preferably a rechargeable battery or a super capacitor which may be charged by a microphone bias when the headset is connected to the mobile communication device. The battery may also be a one-time use battery and replaced when the power has been entirely discharged from the battery 346. Alternatively, the multi-button control 204 may be powered by a bias current supplied through the multi-conductor line.

A plurality of buttons 348, 350, 352, 354 and 356 is connected to the multi-button control 204. For instance, button 348 may represent a mute button, button 350 may represent a volume up button, button 352 may represent a volume down button, button 354 may represent a rewind button, and button 356 may represent a play/stop button for control an audio player. As will be understood, the number of switches is limitless but is dependent on the physical size of the multi-button remote control. Each of the plurality of buttons 348, 350, 352, 354 and 356 may also be connected to ground.

In the present embodiment, an output 358 of the multi-button remote control 204 is connected to the FET 332. As will be described below with respect to the operation of the control output 358, this connection provides the necessary signals to control the mobile communication device 202. A filter 360 may also be present to reduce noise.

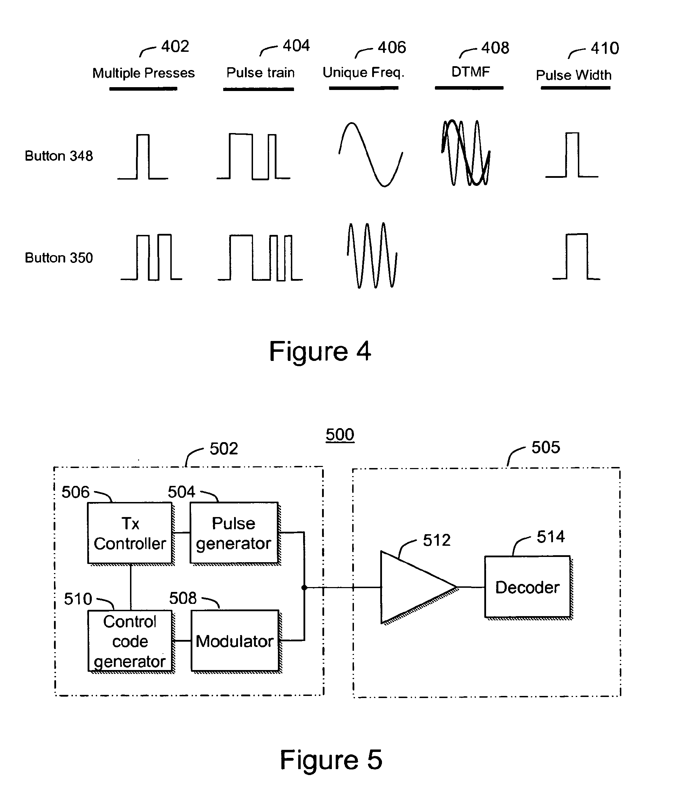

Figure 4 provides non-limiting exemplary methods of encoding the control signals, which are transmitted from the multi-button remote control 204 to the mobile communication device 202. Encoding control signal mode 402 utilizes multiple presses, encoding control signal mode 404 utilizes pulse trains, encoding control signal mode 406 utilizes unique frequencies, encoding control signal mode 408 utilizes a dual tone multiple frequency (DTMF) and encoding control signal mode 410 utilizes pulse width. It will be understood that each mobile communication device 202 preferably operates in one of the encoding control signal modes but in some embodiments, the mobile communication device 202 may operate under multiple control signal modes depending on the required functionality.

Figure 5 illustrates an example of a circuitry 500 modulating the pulses in the multi-button remote control 204 to be sent to mobile communication device 202.

The circuitry 500 includes a transmitter section 502 and a receiver section 505, each shown in dotted outline. The transmitter section 502 includes a pulse generator 504 that produces pulses under the control of a transmission controller 506. Pulses from the pulse generator 504 are modulated by a modulator 508 with a control code generated by a code generator 510 under the control of the transmission controller 506.

The modulated pulses produced by modulator 508 to the receiver section 505, generally in the mobile communication device 202.

The receiver section 505 may include an amplifier 512 to amplify the received signal. The amplified signal produced by amplifier 512 is fed to a decoder/demodulator 514, which demodulates the signal.

In this embodiment, when one of the plurality of buttons 348, 350, 352, 354 and 356 for example, the user wishes to play music, after pressing button 356, the multi-button remote control 204 determines the signal that needs to be transmitted from the multi-button remote control 204 to play music.

The pulses encoding the signal are sent to the Field-Effect Transistor 332 which then shortens the microphone to ground. Therefore, the control signal may interfere with the audio signal designated to or originating from the headset. In this example, the microphone is switched off every time a control button is pressed.

In general, when a control signal shares with an audio signal in a shared line between the mobile communication device and the headset, the control signal may interfere with the audio signal. More generally, even if the control signal is carried in a separate line, if the control signal line is in close proximity of the audio lines, interferences, for example, electromagnetic interferences may still occur.

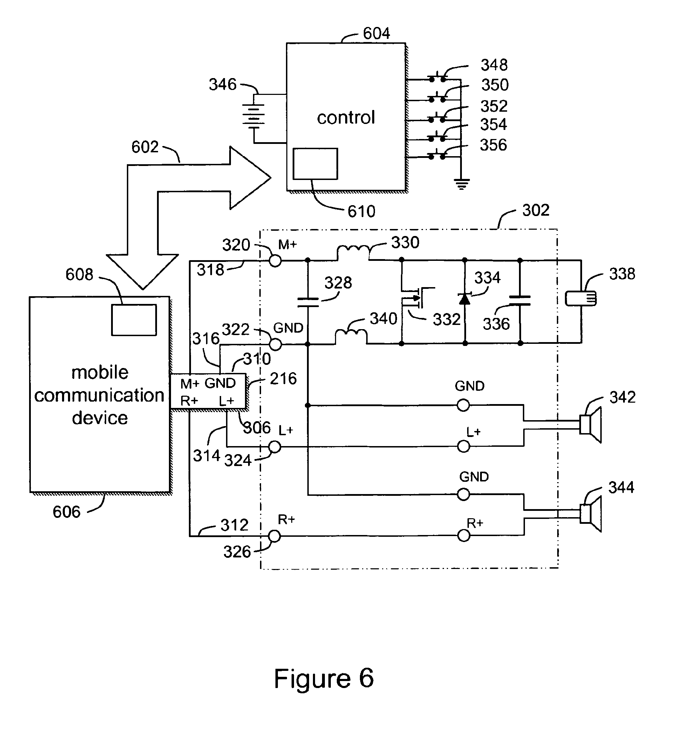

Referring to Figure 6, in accordance with one embodiment of the present patent disclosure, there is provided a wireless control channel 602 between the multi-button remote control 604 and the mobile communication device 606.

Referring to Figures 4, 5 and 6, the control signals, for example, control signals utilizing pulse trains 404, unique frequencies 406, dual tone multiple frequency (DTMF) 408 or pulse width 410 between the transmitter section 502 on the multi-button remote control 604 and the receiver section 505 on the mobile communication device 606 are carried through wireless transmission.

The control channel 602 may be used for the control signal from the multi-button remote control 604 to the mobile communication device 606, as well as for control signal or feedback information or both from the mobile communication device 606 to the multi-button remote control 604.

One embodiment of the present patent disclosure uses Bluetooth technology for implementing the wireless control channel.

Bluetooth is an industrial specification for wireless personal area networks. Bluetooth provides a way to connect devices such as mobile phones, laptops, personal computers, printers, digital cameras, and video game consoles over a secure, globally unlicensed short-range radio frequency. The Bluetooth specifications are developed and licensed by the Bluetooth Special Interest Group.

Originally, Bluetooth wireless technology's strength is the ability to simultaneously handle both data and voice transmissions. This enables users to enjoy variety of innovative services such as a hands-free headset for voice calls, printing and fax capabilities, and synchronizing personal digital assistants (PDA), and laptop. In one embodiment of the present patent disclosure, the audio/video remote control functionality of Bluetooth is used for controlling a headset to a mobile communication device, whereby the headset is already connected to the mobile communication device through a multi-conductor line.

Bluetooth uses a variety of protocols and profiles. A Bluetooth profile is an interface specification for Bluetooth-based communication between devices. In order to use Bluetooth wireless technology, a device must be able to interpret certain Bluetooth profiles defining the applications.

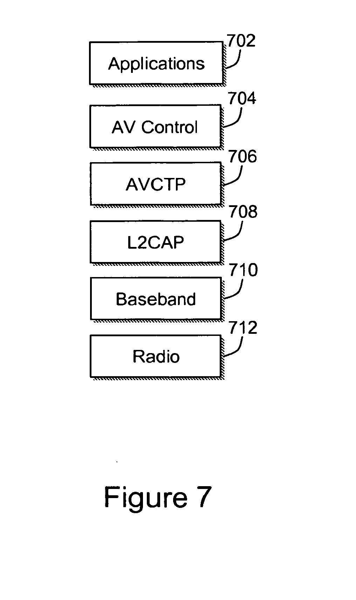

Referring to Figure 7, a high-level view of the architecture of the Bluetooth protocol stack in the Audio/Video Remote Control Profile (AVRCP) is illustrated. This profile provides a standard interface to allow a remote control to control an audio/video equipment.

The application layer 702 in AVRCP includes a controller and a target. Also referring to Figure 6, the controller may be the multi-button remote control 604, and the multi-purpose mobile communication device 606 may be considered as the target device. The AV control layer 704 translates the detected user action to the AN control signal. The AN control signal are transported by the Audio/Video Control Transport Protocol (AVCTP) layer 706. The Logical Link Control and Adaptation Protocol (L2CAP) layer 708 receives data from the AVCTP layer and adapts it to the Bluetooth format. The baseband layer 710 is responsible for controlling and sending data packets over the radio link. The radio layer 712 is the physical wireless connection. Bluetooth divides the 2.4 GHz frequency band into 79 channels using the spread spectrum to hop from one channel to another, up to 1600 times a second.

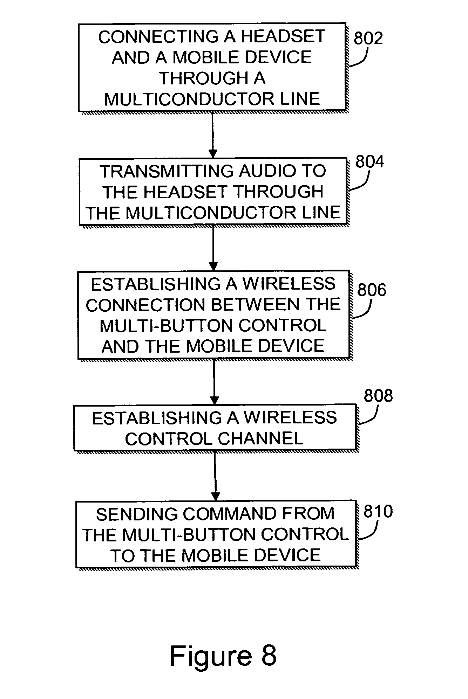

Figure 8 describes a method of establishing a wireless control channel between a multi-button remote control 604 of a headset and a mobile communication device 606 according to one embodiment of the present patent disclosure. A multi-conductor line is used to connect a headset and a mobile communication device 802, whereby the audio is carried through the multi-conductor line 804. A wireless connection is then established between a multi-button remote control and the headset 806. A wireless control channel is established using the wireless connection 808 while the audio is carried to the headset through the multi-conductor line. The commands from the multi-button remote control are sent through the wireless control channel 810.

The wireless control channel may be implemented using a single chip technology. Using Bluetooth as an example, there are off-the-shelf chips implementing available Bluetooth technology. For example, CSR of Cambridge, United Kingdom, offers a line of Bluetooth chips and related specifications, sold under the trademark BlueCore, that can be used to implement a Bluetooth wireless control channel. A single chip on the respective multi-button remote control 604 and the mobile communication device 606 implementing the wireless control channel therebetween is illustrated in Figure 6. A single chip such as BlueCore may combine many functions such as radio frequency, baseband, audio codec, power supply, and antenna balancing. Generally, the wireless control channel consumes low power. For example, Bluetooth low energy technology (Wibree) is designed for devices to have a battery life of up to one year.

The above embodiment has been described using Bluetooth as an example for establishing a wireless control channel between a multi-button remote control and a mobile communication device. However, it should be apparent to a person skilled in the art that other wireless technology may also be used to implement the wireless control channel, for example, but not limited to, 802.11, infrared, WiMax, WAN, Zigbee (802.15), Ultra Wideband (UWB), or home radio frequency.

Further, the above embodiment has been described for playing audio files on a multi- functional mobile communication device, it should be apparent to a person skilled in the art that the wireless control channel can also be implemented for a stand-alone audio or video player or both.

The embodiment of the present patent disclosure is also not limited to audio sent to a speaker of the headset. Video may be sent to head mounted displays (HMD's, also know as video glasses, video goggles, Virtual Reality glasses) through the multi-conductor line and thereby controlled by a multi-button remote control.

The multi-button remote control may form part of the headset or be separate from the headset. If the multi-button remote control is part of the headset, a bias current may be drawn from the device the headset is connected to power the multi-button remote control, or to charge the battery of the multi-button remote control, or both.

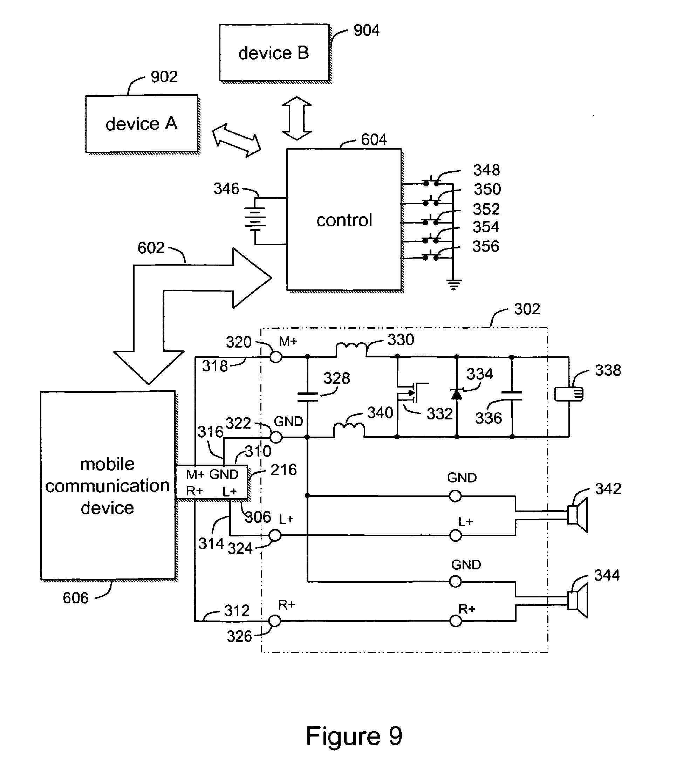

Referring to Figure 9, the control 604 of the headset may be used to control other devices 902 and 904 wirelessly. For example, in the case of a Bluetooth implementation, the multi-button remote control may be a master to a plurality of other devices or controlled by another device.

Embodiments within the scope of the present patent disclosure can be implemented in digital electronic circuitry, or in computer hardware, firmware, software, or in combinations thereof. Apparatus within the scope of the present patent disclosure can be implemented in a computer program product tangibly embodied in a machine-readable storage device for execution by a programmable processor; and method actions within the scope of the present patent disclosure can be performed by a programmable processor executing a program of instructions to perform functions of the patent disclosure by operating on input data and generating output. Embodiments within the scope of the present patent disclosure may be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files. Embodiments within the scope of the present patent disclosure include computer-readable media for carrying or having computer-executable instructions, computer-readable instructions, or data structures stored thereon. Such computer-readable media may be any available media, which is accessible by a general-purpose or special-purpose computer system. Examples of computer-readable media may include physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system. Any of the foregoing can be supplemented by, or incorporated in, ASICs (application-specific integrated circuits).

While particular embodiments of the present patent disclosure have been shown and described, changes and modifications may be made to such embodiments without departing from the patent disclosure.

## Claims

1. A headset (208) comprising:
a speaker (342);
a multi-pole connector (216) for connecting to a mobile communication device (606) outputting an audio;
a multi-conductor line (312, 314, 316, 318) connecting the multi-pole connector (216) to the speaker (342), the multi-conductor line (312, 314, 316, 318) carrying the audio from the mobile communication device (606) to the speaker (342); and
a multi-button remote control (604),
**characterized in that**
the multi-button remote control (604) has a circuitry (610) adapted to establish a wireless control channel (602), the wireless control channel (602) used for sending a command from the multi-button remote control (604), the command controlling the outputting of the audio.

2. The headset according to claim 1, wherein the wireless control channel (602) is implemented using Bluetooth technology.

3. The headset according to claim 1, wherein the wireless control channel (602) uses AudioNideo Remote Control Profile.

4. The headset according to claim 1, wherein the multi-button remote control (604) is attached to the headset.

5. The headset according to claim 1, further comprising a single chip (610) for implementing the wireless control channel (602).

6. The headset according to claim 1, wherein the headset (208) is a stereo headset and further comprises an additional speaker (344).

7. The headset according to claim 1, wherein the multi-conductor line (312, 314, 316, 318) has adequate number of conductors for transmitting the audio.

8. The headset according to claim 1, wherein the command is encoded in one member selected from the group consisting of: multiple presses (402), pulse trains (404), unique frequencies (406), dual tone multiple frequency (408), pulse width (410) and a combination thereof.

9. The headset according to claim 1, wherein the wireless control channel (602) is bidirectional.

10. The headset according to claim 1, wherein the multi-pole connector (216) has four poles (102, 104, 106, 108).

11. The headset according to claim 1, wherein the multi-button remote control (604) is powered by a rechargeable battery (346).

12. The headset according to claim 1, wherein the multi-button remote control (604) is powered by a bias current.

13. The headset according to claim 1, wherein the multi-button remote control (604) is adapted to communicate with other wireless devices (902, 904).

14. A multi-purpose mobile communication device (606) comprising:
a socket for receiving a multi-pole connector (216) of a headset (208), the headset (208) including a speaker (342); the multi-pole connector (216) connected to a multi-conductor line (312, 314, 316, 318) extending to the speaker (342), the headset (208) further comprising a multi-button remote control (604);
a first circuitry decoding audio files and transmitting an audio to the socket and through the multi-conductor line (312, 314, 316, 318) extending to the speaker (342); and
a second circuitry (608);
**characterized in that**
the second circuitry (608) is adapted to establish a wireless control channel (602) with a multi-button remote control (604), the wireless control channel (602) used for receiving a command from the multi-button remote control (604), the command controlling the outputting the audio.

15. A method for controlling playback of audio files on a mobile communication device (606), the method comprising:
connecting (802) a headset (208) to a mobile communication device (606) through a multi-conductor line (312, 314, 316, 318); and
transmitting (804) an audio to the headset (208) through the multi-conductor line (312, 314, 316, 318);
**characterized in that** the method comprise:
establishing (806) a wireless connection between a multi-button remote control (604) and the mobile communication device (606);
establishing (808) a wireless control channel (602) over the wireless connection; and
transmitting (810) a command from the multi-button remote control (604) to the mobile communication device (606) over the wireless control channel (602).

## Patentansprüche

1. Headset (208) mit:
einem Lautsprecher (342);
einem mehrpoligen Steckverbinder (216) zum Verbinden mit einer mobilen Kommunikationsvorrichtung (606), die ein Audiosignal ausgibt;
einer mehradrigen Leitung (312, 314, 316, 318), die den mehrpoligen Steckverbinder (216) mit dem Lautsprecher (342) verbindet, wobei die mehradrige Leitung (312, 314, 316, 318) das Audiosignal von der mobilen Kommunikationsvorrichtung (606) zum Lautsprecher (342) trägt; und
einer Fernsteuerung (604) mit mehreren Knöpfen,
**dadurch gekennzeichnet, dass**
die Fernsteuerung (604) mit mehreren Knöpfen Schaltkreise (610) aufweist, die dazu ausgelegt sind, einen drahtlosen Steuerkanal (602) herzustellen, wobei der drahtlose Steuerkanal (602) zum Senden eines Befehls von der Fernsteuerung (604) mit mehreren Knöpfen verwendet wird und der Befehl die Ausgabe des Audiosignals steuert.

2. Headset nach Anspruch 1, wobei der drahtlose Steuerkanal (602) unter Verwendung der Bluetooth-Technologie implementiert ist.

3. Headset nach Anspruch 1, wobei der drahtlose Steuerkanal (602) ein Audiosignal/Video Remote Control Profile (Audiosignal/Video-Fernsteuerungsprofil) verwendet.

4. Headset nach Anspruch 1, wobei die Fernsteuerung (604) mit mehreren Knöpfen am Headset angebracht ist.

5. Headset nach Anspruch 1, weiterhin mit einem einzelnen Chip (610) zum Implementieren des drahtlosen Steuerkanals (602).

6. Headset nach Anspruch 1, wobei das Headset (208) ein Stereoheadset ist und weiterhin einen zusätzlichen Lautsprecher (344) umfasst.

7. Headset nach Anspruch 1, wobei die mehradrige Leitung (312, 314, 316, 318) eine angemessene Anzahl von Adern zum Übertragen des Audiosignals hat.

8. Headset nach Anspruch 1, wobei der Befehl in einem Element kodiert ist, das ausgewählt ist aus der Gruppe, die aus: Etagenpressen (402), Impulszügen (404), einmaligen Frequenzen (406), Dualton-Mehrfachfrequenzen (408), Impulsbreite (410) und einer Kombination davon besteht.

9. Headset nach Anspruch 1, wobei der drahtlose Steuerkanal (602) bidirektional ist.

10. Headset nach Anspruch 1, wobei der mehrpolige Steckverbinder (216) vier Pole (102, 104, 106, 108) aufweist.

11. Headset nach Anspruch 1, wobei die Fernsteuerung (604) mit mehreren Knöpfen von einem Akkumulator (346) betrieben wird.

12. Headset nach Anspruch 1, wobei die Fernsteuerung (604) mit mehreren Knöpfen von einem Vormagnetisierungsstrom betrieben wird.

13. Headset nach Anspruch 1, wobei die Fernsteuerung (604) mit mehreren Knöpfen dazu ausgelegt ist, mit anderen drahtlosen Vorrichtungen (902, 904) zu kommunizieren.

14. Mobile Mehrzweck-Kommunikationsvorrichtung (606) mit:
einer Steckerbuchse zum Aufnehmen eines mehrpoligen Steckverbinders (216) eines Headsets (208), wobei das Headset (208) einen Lautsprecher (342) einschließt;
der mehrpolige Steckverbinder (216) mit einer mehradrigen Leitung (312, 314, 316, 318) verbunden ist, die zum Lautsprecher (342) verläuft, und das Headset (208) weiterhin eine Fernsteuerung (604) mit mehreren Knöpfen umfasst;
ersten Schaltkreisen, die Audiosignaldateien dekodieren und ein Audiosignal an die Steckerbuchse und durch die mehradrige Leitung (312, 314, 316, 318) übertragen, die zum Lautsprecher (342) verläuft; und
zweiten Schaltkreisen (608);
**dadurch gekennzeichnet, dass**
die zweiten Schaltkreise (608) dazu ausgelegt sind, einen drahtlosen Steuerkanal (602) mit einer Fernsteuerung (604) mit mehreren Knöpfen herzustellen, wobei der drahtlose Steuerkanal (602) zum Empfangen eines Befehls von der Fernsteuerung (604) mit mehreren Knöpfen dient und der Befehl die Ausgabe des Audiosignalsignals steuert.

15. Verfahren zum Steuern der Wiedergabe von Audiosignaldateien in einer mobilen Kommunikationsvorrichtung (606), wobei das Verfahren umfasst:
Verbinden (802) eines Headsets (208) mit einer mobilen Kommunikationsvorrichtung (606) durch eine mehradrige Leitung (312, 314, 316, 318); und
Übertragen (804) eines Audiosignals an das Headset (208) durch die mehradrige Leitung (312, 314, 316, 318);
**dadurch gekennzeichnet, dass** das Verfahren umfasst:
Herstellen (806) einer drahtlosen Verbindung zwischen einer Fernsteuerung (604) mit mehreren Knöpfen und der mobilen Kommunikationsvorrichtung (606);
Herstellen (808) eines drahtlosen Steuerkanals (602) über die drahtlose Verbindung; und
Übertragen (810) eines Befehls von der Fernsteuerung (604) mit mehreren Knöpfen an die mobile Kommunikationsvorrichtung (606) über den drahtlosen Steuerkanal (602).

## Revendications

1. Casque (208) comprenant :
un haut-parleur (342) ;
un connecteur multipolaire (216) destiné au raccordement avec un dispositif de communication mobile (606) qui produit un signal audio ;
une ligne à conducteurs multiples (312, 314, 316, 318) qui raccorde le connecteur multipolaire (216) au haut-parleur (342), la ligne à conducteurs multiples (312, 314, 316, 318) transportant le signal audio entre le dispositif de communication mobile (606) et le haut-parleur (342) ; et
une télécommande à boutons multiples (604) ;
**caractérisé en ce** qui :
la télécommande à boutons multiples (604) possède un ensemble de circuits (610) conçu pour établir un canal de commande sans fil (602), le canal de commande sans fil (602) étant utilisé pour envoyer à partir de la télécommande à boutons multiples (604) une instruction qui commande la production du signal audio.

2. Casque selon la revendication 1, dans lequel le canal de commande sans fil (602) est mis en oeuvre à l'aide de la technologie Bluetooth.

3. Casque selon la revendication 1, dans lequel le canal de commande sans fil (602) utilise un profil de télécommande audio/vidéo.

4. Casque selon la revendication 1, dans lequel la télécommande à boutons multiples (604) est fixée sur le casque.

5. Casque selon la revendication 1, comprenant en outre une puce unique (610) pour mettre en oeuvre le canal de commande sans fil (602).

6. Casque selon la revendication 1, le casque (208) étant un casque stéréo et comprenant en outre un haut-parleur supplémentaire (344).

7. Casque selon la revendication 1, dans lequel la ligne à conducteurs multiples (312, 314, 316, 318) possède un nombre adéquat de conducteurs pour transmettre le signal audio.

8. Casque selon la revendication 1, dans lequel l'instruction est codée en un élément sélectionné dans le groupe suivant : actionnement multiple (402), trains d'impulsions (404), fréquences uniques (406), fréquences vocales (408), largeur d'impulsions (410), et combinaisons de ceux-ci.

9. Casque selon la revendication 1, dans lequel le canal de commande sans fil (602) est bidirectionnel.

10. Casque selon la revendication 1, dans lequel le connecteur multipolaire (216) possède quatre pôles (102, 104, 106, 108).

11. Casque selon la revendication 1, dans lequel la télécommande à boutons multiples (604) est alimentée par un accumulateur rechargeable (346).

12. Casque selon la revendication 1, dans lequel la télécommande à boutons multiples (604) est alimentée par un courant de polarisation.

13. Casque selon la revendication 1, dans lequel la télécommande à boutons multiples (604) est conçue pour communiquer avec d'autres dispositifs sans fil (902, 904).

14. Dispositif de communication mobile à usages multiples (606), comprenant :
une douille destinée à recevoir un connecteur multipolaire (216) d'un casque (208), le casque (208) comprenant un haut-parleur (342) ; le connecteur multipolaire (216) étant connecté à une ligne à conducteurs multiples (312, 314, 316, 318) qui s'étend jusqu'au haut-parleur (342) ; le casque (208) comprenant en outre une télécommande à boutons multiples (604) ;
un premier ensemble de circuits décodant des fichiers audio et émettant un signal audio vers la douille et, via la ligne à conducteurs multiples (312, 314, 316, 318), vers le haut-parleur (342) ; et
un second ensemble de circuits (608) ;
**caractérisé en ce** qui :
le second ensemble de circuits (608) est conçu pour établir un canal de commande sans fil (602) avec une télécommande à boutons multiples (604), le canal de commande sans fil (602) étant utilisé pour recevoir une instruction en provenance de la télécommande à boutons multiples (604), l'instruction commandant la sortie du signal audio.

15. Procédé de commande de la reproduction de fichiers audio sur un dispositif de communication mobile (606), le procédé comprenant les étapes consistant à :
connecter (802) un casque (208) à un dispositif de communication mobile (606), via une ligne à conducteurs multiples (312, 314, 316, 318) ; et
émettre (804) un signal audio vers le casque (208), via la ligne à conducteurs multiples (312, 314, 316, 318) ;
le procédé étant **caractérisé en ce qu'**il comprend en outre les étapes consistant à :
établir (806) une connexion sans fil entre une télécommande à boutons multiples (604) et le dispositif de communication mobile (606) ;
établir (808) un canal de commande sans fil (602) sur la connexion sans fil ; et
émettre (810) une instruction de la télécommande à boutons multiples (604) vers le dispositif de communication mobile (606), via le canal de commande sans fil (602).
